# EUROPÄISCHE PATENTSCHRIFT

(11) **EP 0 750 073 B1**
(45) Veröffentlichungstag und Bekanntmachung des Hinweises auf die Patenterteilung: **28.08.2002**
(21) Anmeldenummer: 96115719.5
(22) Anmeldetag: 22.02.1995
(51) Int. Cl.: E03B 11/14

(54) **Wasserkammer eines Trinkwasser-Hochbehälters**
Water chamber of an elevated water reservoir
Chambre à eau d'un réservoir surélevé à eau potable

(30) Priorität: 05.03.1994 DE 4407356; 05.03.1994 DE 4407354; 05.03.1994 DE 4407355
(43) Veröffentlichungstag der Anmeldung: 27.12.1996
(62) Teilanmeldung aus: 95102499.1
(73) Patentinhaber: VSB VOGELSBERGER Umwelttechnischer Anlagenbau GmbH, D-36369 Lautertal-Eichenrod (DE)
(72) Erfinder: Scharenberg, H.-Dieter, Dipl.-Ing., 57577 Hamm/Sieg (DE)
(74) Vertreter: Pietruk, Claus Peter, Dipl.-Phys.

(56) Entgegenhaltungen:
- CH-A- 310 185
- DE-A- 2 716 382
- DE-C- 229 411
- FR-A- 1 037 086
- GB-A- 751 652

## Beschreibung

Die vorliegende Erfindung bezieht sich auf einen Hochbehälter für die Trinkwasserspeicherung nach dem Oberbegriff des Patentanspruchs 1.

Hochbehälter der vorgenannten Art sind in Verbindung mit der Wasserversorgung zur Deckung des Wasserbedarfs mit Trinkwasser bekannt (vergleiche FR-A-1 037 086 und DE-C-229 411). Dabei wird das Wasser von den Gewinnungsstellen dem Wasserwerk zugeführt, hier zu Reinwasser aufbereitet, in Wasserbehältern - beispielsweise in gattungsgemäßen Hochbehältern - gespeichert und in die Verteilungsanlagen (nämlich das Rohrnetz der kommunalen Wasserversorgungseinrichtungen) gefördert.

Bei den bekannten Hochbehältern zeigt es sich bauartbedingt immer wieder, daß die Bewegung und Zirkulation des Trinkwassers in der Wasserkammer mangelhaft ist. Selbst in Verbindung mit kreisförmigen Wasserkammern, bei denen das Trinkwasser vom Zulaufrohr zur Entnahmestelle aufgrund eines konstruktiv vorgegebenen Gefälles fließen soll, ist immer wieder festzustellen, daß sich relativ große Ruhezonen, um nicht zu sagen Totzonen, ausbilden, in denen praktisch kein Wasseraustausch stattfindet.

Die der vorliegenden Erfindung zugrunde liegende Aufgabe besteht mithin darin, einen Hochbehälter anzugeben, bei dem das vorstehend genannte Problem gelöst ist.

Hierzu wird erfindungsgemäß vorgeschlagen einen Hochbehälter für die Trinkwasserspeicherung aufweisend eine Kammer für Trinkwasser, die als kreisförmiges Rundbecken ausgebildet ist, undeinendarinkonzentrischangeordneten kreiszylindrischen Rundturm, der eine Bedienungs-und Schieberkammer und ein Kontrollgebäude enthält, sowie mindestens einen Zu- und mindestens einem Ablauf für das Trinkwasser, wobei weiter mindestens eine das Rundbecken separierende Ringraumtrennwand vorgesehen ist, auf deren einer Seite mindestens der Zu- und auf deren anderer Seite der Ablauf vorgesehen ist, die mindestens eine Ringraumtrennwand zwischen Außenwand und Kammer derart schräg angeordnet ist, daß sich zwei Spitzecken zwischen der Ringtrennwand und der Außenwand beziehungsweise zwischen der Ringtrennwand und dem Rundturm bilden.

Mit anderen als im vorstehend zitierten Anspruch 1 gebrauchten Worten besteht der Kern der vorliegenden Erfindung darin, einen Hochbehälter der gattungsgemäßen Art anzugeben, bei dem das (zwischenzu-) speichernde Trinkwasser zwangsläufig einmal durch die gesamte Wasserkammer bewegt wird, ehe es über die Ablauf- beziehungsweise Entnahmestelle ins Leitungsnetz abfließt.

Dieses Problem wird funktional dadurch gelöst, daß das dem Hochbehälter zugeführte Trinkwasser auf dem Weg zur späteren Entnahme einer Zwangsbewegung beziehungsweise Zwangszirkulation ausgesetzt wird, und zwar ohne jede Ruhezone und ohne jede Kurzschlußströmung. Diese Zwangszirkulation wird dadurch erzielt, daß die Wasserkammer mindestes einmal geteilt wird, wobei dann das Trinkwasser auf der einen Seite der Trennwand der Wasserkammer zugeführt und auf der zweiten Seite (wieder) abgeführt wird. Das zugeführte Trinkwasser muß die Wasserkammer hierbei also einmal ganz durchlaufen, so daß eine 100 %-ige Zirkulation gewährleistet ist, und zwar zu jeder Uhrzeit und über die gesamte Ringraumbreite der Wasserkammer.

In der erfindungsgemäßen Ausgestaltung ist die Ringraumtrennwand dazu schräg in der Wasserkammer angeordnet, um die Zirkulation des Trinkwassers zu maximieren. Dabei kann die Schrägstellung der Ringraumtrennwand in Abhängigkeit von der Anordnung der Zu- und Ablaufstelle gewählt werden, und es wird darüber hinaus die Bodensohle der Wasserkammer bevorzugt geneigt ausgebildet, und zwar gleichermaßen in Abhängigkeit von der Zu- und Ablaufstelle des Trinkwassers.

Eine besonders bevorzugte Konstruktion sieht zwei Ringraumtrennwände vor. Damit wird die Wasserkammer zweigeteilt und es ist für den Fall, daß beispielsweise während einer Grundreinigung des Hochbehälters gerade ein Brand ausbrechen sollte, die sogenannte Brandreserve; sowie auch die Versorgung der Bevölkerung gewährleistet.

Die Einzelheiten der vorliegenden Erfindung werden im folgenden anhand der Zeichnung näher erläutert. Diese zeigt in
- Fig. 1: einen Hochbehälter in geschnittener Ansicht als Systemschnitt A-A entsprechend dem Grundriß nach Fig. 2;
- Fig. 2: eine Aufsicht auf den Grundriß des Hochbehälters nach Fig. 1.

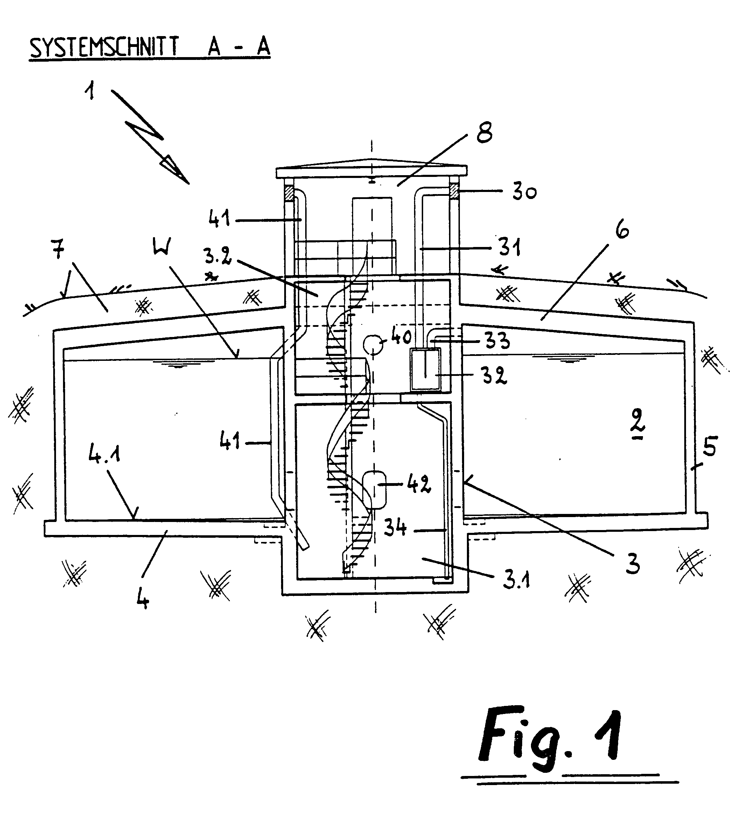

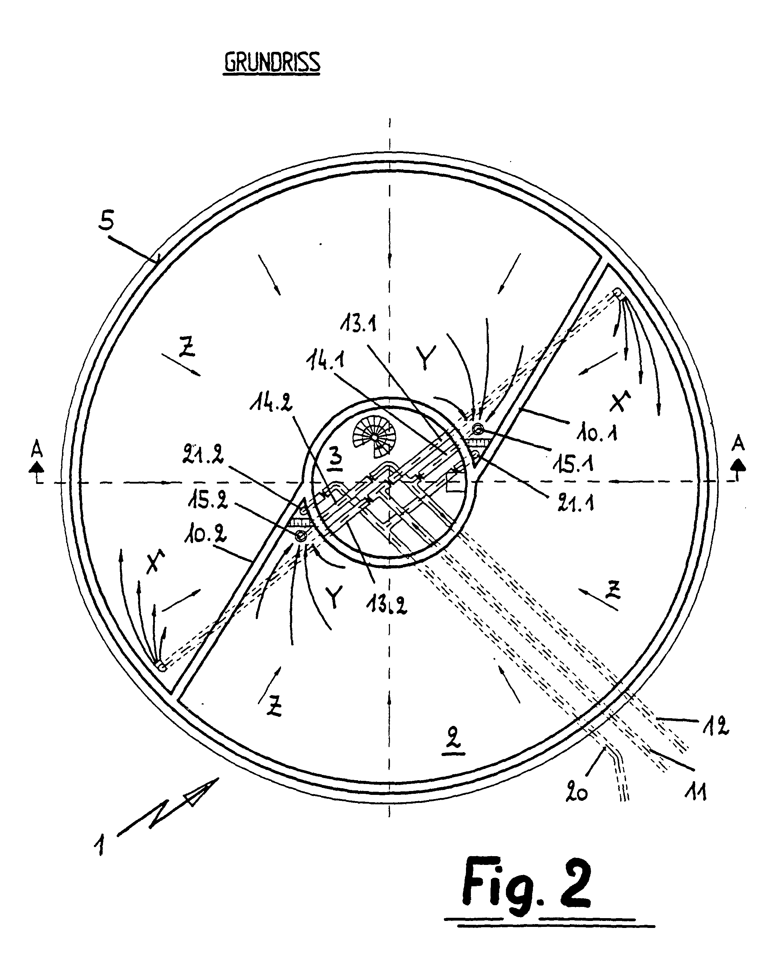

Der in Fig. 1 und Fig. 2 zeichnerisch dargestellte Hochbehälter 1 als Gesamtbauwerk besteht aus einer kreisringförmigen Wasserkammer, d.h. einem kreisringförmigen Rundbecken 2, und einem koaxial im Rundbecken eingesetzten, im folgenden Rundturm 3 genannten, Kreiszylinder. Dieser Rundturm 3 hat drei Ebenen und dient im unteren Bereich als Bedienungs- und Schieberkammer 3.1 und im darüber liegenden Bereich als Kontrollgebäude 3.2. Der Rundturm 3 enthält demzufolge sämtliche Installationen und Gerätschaften zur bestimmungsgemäßen Bedienung und Überwachung des Hochbehälters 1. Oberirdisch ist ein Eingangsbereich 8 angeordnet, wobei die einzelnen Stockwerke beziehungsweise Ebenen über radial, an der runden Schieberkammerwand befestigte Treppenstufen, oder wahlweise über eine Wendeltreppe erreicht werden. An der Decke des Eingangsbereichs kann eine Kranschiene für einen Hebezug angebracht werden; in der Mitte der Zwischendecken sind Öffnungen vorgesehen, durch die eine problemlose Montage und Wartung der Schieber und Geräte möglich ist. Im Rundturm 3 kann selbstverständlich auch eine Druckerhöhungsanlage für einzelne Häuser oder Baugebiete installiert werden; elektrische Einrichtungen und Schaltschränke oder dergleichen sind aus naheliegenden Gründen im oberen Eingangsbereich 8 untergebracht.

Das kreisringförmige Rundbecken 2 und der Rundturm 3 gründen auf einer gemeinsamen homogenen Bodenplatte 4, wobei der Kreisring zwischen dem Rundturm 3 und einer konzentrischen Außenwand 5 des Rundbeckens 2 dieses Rundbecken 2 dimensionsmäßig bestimmen. Da das Gesamtbauwerk auf einer einheitlichen Bodenplatte 4 gegründet ist, die nur durch einen tieferliegenden Teil der Bedienungs- und Schieberkammer unterbrochen ist, scheiden Schäden, die sonst durch Setzungen einzelner Bauteile und nur durch aufwendige Dehnungsfugen und elastische Rohrverbindungen verhindert werden können von vornherein aus.

Die Wasserkammer, d.h. das Rundbecken 2, weist eine Deckplatte 6 auf, auf der zwecks geologischer Einbettung im Gelände Erdreich 7 abgelagert ist. Somit steht letztlich nur der Eingangsbereich 8 für den Rundturm 3 dem Erdreich 7 gegenüber vor, so daß vom gesamten Hochbehälter 1 - anders als bei den bekannten Hochbehältern - nur ein relativ kleiner Teil sichtbar ist (und die Landschaft stört). Insoweit ist noch besonders darauf hinzuweisen, daß keinerlei Be- und Entlüftungsstutzen an irgendeiner Stelle des Erdreichs vorragen.

Die bisherige Beschreibung des in der Zeichnung dargestellten Hochbehälters 1 betrifft alleine dessen konzeptionelle Grundaufgabe. Bautechnisch betrachtet ist der vorbeschriebene Hochbehälter 1 noch insoweit ergänzt beziehungsweise modifiziert, als das kreisringförmige Rundbecken 2 durch zwei schräg liegende Ringraumtrennwände 10.1 / 10.2 separiert wird.

Gemäß dem dargestellten Ausführungsbeispiel sind die beiden Ringraumtrennwände 10.1 / 10.2 etwa so angeordnet, daß sie in zwei sich gegenüberliegenden Quadranten des Rundbeckens 2 zwischen dem Rundturm 3 und der Außenwand 5, und zwar vom Rundturm 3 ausgehend, etwa im Winkel von etwa 60° zur Außenwand 5 hin liegen; beide Ringraumtrennwände 10.1 / 10.2 liegen parallel zueinander.

Bezüglich der bestimmungsgemäßen Funktion sind nun einerseits ein Zulauf für das Trinkwasser, also ein Zulaufrohr 11, und andererseits für die Entnahme ein Entnahmerohr 12 vorgesehen. Das Zulaufrohr 11 und das Entnahmerohr 12 führen parallel zueinander radial zum Rundturm 3, d.h. zur Schieberkammer 3.1, und werden von hier radial zum Ringraum des Rundbeckens 2 verlängert. Zulaufrohr 11 und Entnahmerohr 12 werden so diametral zueinander jeweils getrennt in Form von zwei Zulauf stutzen 13.1 / 13.2 und in Form von zwei Entnahmestutzen 14.1 / 14.2 ins Rundbecken 2 geführt. Die Zulaufstutzen 13.1 / 13.2 sind jeweils bis in die Nähe der Außenwand 5 geführt, und zwar derart, daß sie die jeweils zugehörige Ringraumtrennwand 10.1 beziehungsweise 10.2 kreuzen. Die Entnahmestutzen 14.1 / 14.2 sind ihrerseits so geführt, daß sie in den inneren Zwickeln zwischen dem Rundturm 3 und den Ringraumtrennwänden 10.1 / 10.2 in Ablaufseihern 15.1 / 15.2 enden.

Im Betrieb wird so das vom Wasserwerk über das Zulaufrohr 11 zugeleitete Trinkwasser über die Enden der Zulaufstutzen 13.1 / 13.2 in die Wasserkammer (Rundbecken 3) eingeführt (vergleiche Pfeil X). Nach einer 180°-Zirkulation, wird sodann das Trinkwasser über die Ablaufseiher 15.1 / 15.2 (vergleiche Pfeil Y), die Entnahmestutzen 14.1 / 14.2 und das Entnahmerohr 12 in das kommunale Wasserversorgungsnetz eingespeist.

Der Vollständigkeit halber sei noch angemerkt, daß in Verbindung mit dem vorher erwähnten Ausführungsbeispiels, die Bodensohle 4.1 der Wasserkammer zur Mitte hin abfallend ausgebildet sein kann (vergleiche Pfeil Z). Damit verbessern sich die Strömungsverhältnisse weiter.

Auch soll angemerkt werden, daß die Zu- / Ablaufrichtung beziehungsweise die Zu- / Ablaufstelle geändert werden können. In diesem Falle ist jedoch auch die Neigung der Bodensohle der Wasserkammer zu invertieren.

Die beiden Wasserkammern können bei entsprechender Rohrinstallation in der Beckenkammer auch hintereinander durchflossen werden, womit dann die Feuerlöschreserve ordnungsgemäß in die Zirkulation eingebunden ist.

In der Darstellung nach Fig. 2 ist neben dem Zulaufrohr 11 und dem Ablaufrohr 12 ein drittes Rohr 20 gezeichnet. Die Aufgabe dieses Rohrs besteht darin, für eine Grundentleerung der Wasserkammer und für einen etwaigen Überlauf im Falle einer Betriebsstörung zur Verfügung zu stehen. Dieses dritte Rohr 20 ist dem dargestellten Ausführungsbeispiels entsprechend zu den Zwickeln zwischen dem Rundturm 3 und den Ringraumtrennwänden 10.1 / 10.2 geführt und schließt an eine relativ zur Bodensohle 4.1 der Wasserkammer tiefer liegende Rinne mit einem Ablauf 21.1, 21.2 an. (Im Falle einer gegenläufigen Trinkwasser-Zu-Abführung ist dieses dritte Rohr 20 zur dann außen liegenden Ablaufstelle zu führen).

Bei der vorliegenden Trinkwasser-Speicheranlage ist so eine zwangsweise Durchströmung der gesamten Wasserkammer gewährleistet. Das Wasser wird über Düsen in der einen Spitzecke zugeführt und muß bis zur Entnahme, die über einen Ablaufseiher in der gegenüberliegenden Spitzecke erfolgt, zwangsweise die gesamte Kammer durchfließen. Damit wird eine hundertprozentige Zirkulation erreicht.

Im Hinblick auf die vorliegende Erfindung könnte der vorbeschriebene Hochbehälter 1 - vergleiche Fig. 1 - geräte- beziehungsweise installationstechnisch weiter wie folgt ausgestattet werden:

Im oberen Bereich des Eingangsbereichs 8 der Bedienungs und Schieberkammer ist eine Zu- und Ablufteinrichtung 30 angebaut, an die zur Belüftung der Wasserkammer eine erste Lüftungsleitung 31 anschließt. Diese erste Lüftungsleitung 31 führt senkrecht nach unten zu einer Meß- und Kontrollkammer 32, die mit Filtern und Luftanalysegeräten (Sensoren) ausgerüstet ist. Die zugeführte Luft wird so kontinuierlich von der Meß- und Kontrollkammer 32 analysiert und ausgangsseitig wieder abgegeben, und zwar über einen Lüftungsrohrstutzen 33, der ins Innere der Wasserkammer führt.

Das gesamte Zu- und Abluftsystem besteht somit aus der zentralen ersten Lüftungsleitung 31 (zuzüglich Lüftungsrohrstutzen 33), in dessen Verlauf die Meß- und Kontrollkammer 32 integriert ist, die die Zuluft ständig überwacht und im Falle einer Störung entsprechende (Alarm-) Signale zu generieren vermag. Damit kann gegebenenfalls eine automatische Abschaltung der Trinkwasserentnahme gesteuert werden.

Zur Funktion sei noch auf folgendes hingewiesen: Mit dem Ansteigen und Abfallen des Wasserspiegels W in der Wasserkammer, d.h. im Rundbecken 2, wird jeweils Luft nach außen gedrückt oder von außen angesaugt. Diese angesaugte Luft wird dann jeweils meßtechnisch untersucht.

Um auch für den Fall einer etwa eingeführten oder eingespritzten Flüssigkeit gewappnet zu sein, ist die Meß- und Kontrollkammer 32 unterhalb des Niveaus des Lüftungsrohrstutzens 33 angeordnet. Damit ist gewährleistet, daß unzulässigerweise zugeführte Flüssigkeiten über ein Ablaufrohr 34 nach unten wegströmen und so nicht in das gespeicherte Trinkwasser gelangen können. Gegebenenfalls kann an dem in der Meß- und Kontrollkammer 32 liegenden Rohranfang des Luftrohrstutzens 33 eine Schließkugel angesetzt werden, die bei einem Ansteigen des Flüssigkeitspegels in der Meß- und Kontrollkammer 32 den Lüftungsrohrstutzen 33 automatisch schließt.

Die Wasserkammer ist gänzlich verschlossen (verkapselt) und sie kann visuell quasi nur durch Bullaugen 40 überwacht und über Drucktüren 42 im entleerten Zustand betreten werden. Da der Luftaustausch ausschließlich über die Meß- und Kontrollkammer 32 erfolgt, ist somit eine optimale Betriebssicherheit gegeben. Es gelangt stets nur soviel Luft ans Trinkwasser, wie zu dessen Frischhaltung und zum physikalischen Druckausgleich notwendig ist und die Wassertemperatur ihrerseits kann übers ganze Jahr weitgehend konstant gehalten werden.

An dieser Stelle ist noch anzumerken, daß zur Optimierung des Temperaturausgleichs zwischen der Wasserkammer und der Bedienungs- und Schieberkammer ein zweite Lüftungsleitung 41 vorgesehen ist, die die zum unteren Bereich des Rundturms 3 geleitete Luft aufgrund einer Leitungsführung durch die Wasserkammer infolge des Wärmeaustauscheffekts auf die gleiche Temperatur wie die Wassertemperatur bringt. Damit wird jeder unerwünschte Temperatursprung zwischen der Wasserkammer und dem Rundturm 3 minimiert beziehungsweise kompensiert. Die Bildung von Schwitzwasser kann nicht stattfinden, so daß in der Bedienungs- und Schieberkammer stets trockene Wände gewährleistet sind.

Gemäß einer besonderen konstruktiven Ausführungsform ist vorgesehen, die Deckplatte 6 auf der Außenwandung 5 und auf den beiden unteren Etagen / Ebenen des Rundturms 3 aufzulagern, so daß - statisch betrachtet - insgesamt ein einheitlicher Baukörper vorhanden ist.

Dieses Gesamtbauwerk kann einheitlich aus Ortbeton erstellt werden; denkbar ist auch, die Bodenplatte 4 aus Ortbeton herzustellen und die Ringwände 5 des Rundbeckens 2 sowie den Rundturm 3 einschließlich Eingangsbereich 8 aus Betonfertigteilen zu erstellen.

## Patentansprüche

1. Hochbehälter (1) für die Trinkwasserspeicherung aufweisend eine Kammer für Trinkwasser, die als kreisförmiges Rundbecken (2) ausgebildet ist, **dadurch gekennzeichnet, daß** einen in das Rundbecken (2) konzentrisch angeordneten kreiszylindrischen Rundturm, der eine Bedienungs-und Schieberkammer (3.1) und ein Kontrollgebäude (3.2) enthält vorgesehen ist, sowie mindestens einen Zulauf (11) und mindestens einen Ablauf (12) für das Trinkwasser,
daß mindestens eine das Rundbekken separierende Ringraumtrennwand (10.1, 10.2) vorgesehen ist, auf deren einer Seite mindestens der Zulauf und auf deren anderer Seite der Ablauf vorgesehen ist, und daß die mindestens eine Ringraumtrennwand zwischen Außenwand (5) und Kammer (3) derart schräg angeordnet ist, daß sich zwei Spitzecken zwischen der Ringtrennwand und der Außenwand beziehungsweise zwischen der Ringtrennwand und dem Rundturm bilden.

2. Hochbehälter nach dem vorhergehenden Anspruch, **dadurch gekennzeichnet, daß** der Ringraumtrennwand (10.1, 10.2) einerseits ein Zulaufrohr mit mindestens einer Zulaufdüse und andererseits ein Entnahmerohr mit mindestens einer Ablaufstelle zugeordnet ist.

3. Hochbehälter nach dem vorhergehenden Anspruch, **dadurch gekennzeichnet, daß** Düsen in der einen Spitzecke vorgesehen sind und der Ablauf in der anderen Spitzecke.

4. Hochbehälter nach dem vorhergehenden Anspruch, **dadurch gekennzeichnet, daß** an der Entnahmespitzecke ein Ablaufseiher vorgesehen ist.

5. Hochbehälter nach einem der vorgehenden Ansprüche, **dadurch gekennzeichnet, daß** die Ringraumtrennwand derart schräg angeordnet ist, daß die radial äußere Kante relativ zur Strömungsrichtung nacheilt, wobei der Zulauf im radial äußeren Bereich und der Ablauf im radial inneren Bereich vorgesehen ist.

6. Hochbehälter nach einem der Ansprüche 1 - 5, **dadurch gekennzeichnet, daß** die Bodensohle der Wasserkammer konisch nach innen abfällt.

7. Hochbehälter nach einem der Ansprüche 1 bis 5, **dadurch gekennzeichnet, daß** die Ringraumtrennwand derart schräg angeordnet ist, daß die radial äußere Kante relativ zur Strömungsrichtung voreilt, wobei der Zulauf im radial inneren Bereich und der Ablauf im radial äußeren Bereich vorgesehen ist.

8. Hochbehälter nach dem vorhergehenden Anspruch, **dadurch gekennzeichnet, daß** die Bodensohle der Wasserkammer konisch nach außen abfällt.

9. Hochbehälter nach einem der vorhergehenden Ansprüche, **dadurch gekennzeichnet, daß** zwei schräge Ringraumtrennwände vorgesehen sind.

10. Hochbehälter nach dem vorhergehenden Anspruch, **dadurch gekennzeichnet, daß** die zwei Ringraumtrennwände in sich gegenüberliegenden Quadranten des Rundbeckens liegen.

11. Hochbehälter nach einem der vorhergehenden Ansprüche, **dadurch gekennzeichnet, daß** die Ringraumtrennwände parallel zueinander liegen.

12. Hochbehälter nach einem der vorhergehenden Ansprüche, **dadurch gekennzeichnet, daß** die Ringraumtrennwand im Winkel von etwa 60° zur Außenwand hin liegt.

## Claims

1. Reservoir (1) for storing drinking water comprising a chamber for drinking water which is constructed as a circular tank (2), **characterised in that** concentrically arranged in the circular tank is a circular cylindrical round tower which contains an operating and slide chamber (3.1) and a control building (3.2) as well as at least one inlet (11) and at least one outlet (12) for the drinking water,
that at least one annular chamber separating wall (10.1, 10.2) is provided for separating the circular tank on one side of which at least one inlet and on the other side of which the outlet is provided, and that the at least one annular chamber separating wall between outer wall (5) and chamber (3) is arranged at a slope in such a way that two acute angle corners are formed between the annular separating wall and the outer wall or between the annular separating wall and the round tower.

2. Reservoir according to the preceding claim, **characterised in that** associated with the annular chamber separating wall (10.1, 10.2) on the one hand is an inlet pipe with at least one inlet nozzle and on the other hand an outlet pipe with at least one discharge point.

3. Reservoir according to the preceding claim, **characterised in that** nozzles are provided in one acute angle corner and the discharge in the other acute angle corner.

4. Reservoir according to the preceding claim, **characterised in that** a discharge strainer is provided in the acute angle outlet corner.

5. Reservoir according to one of the preceding claims, **characterised in that** the annular chamber separating wall is arranged at a slope in such a way that the radial outer edge trails in relation to the flow direction, wherein the inlet is provided in the radial outer region and the outlet in the radial inner region.

6. Reservoir according to one of the claims 1-5, **characterised in** chat the base floor of the water chamber reduces conically inwards.

7. Reservoir according to one of the claims 1 to 5, **characterised in** chat the annular chamber separating wall is arranged at a slope in such a way that the radial outer edge leads in relation to the flow direction, wherein the inlet is provided in the radial inner region and the outlet in the radial outer region.

8. Reservoir according to the preceding claim, **characterised in that** the base floor of the water chamber reduces conically outwards.

9. Reservoir according co one of the preceding claims, **characterised in that** two sloping annular chamber separating walls are provided.

10. Reservoir according to the preceding claim, **characterised in that** the two annular chamber separating walls are located in oppositely arranged quadrants of the circular tank.

11. Reservoir according to one of the preceding claims, **characterised in that** the annular chamber separating walls are situated parallel to each other.

12. Reservoir according to one of the preceding claims, **characterised in that** the annular chamber separating wall is situated at an angle of approximately 60° to the outer wall.

## Revendications

1. Réservoir surélevé (1) pour le stockage d'eau potable présentant une chambre contenant de l'eau potable qui est réalisée en tant que bassin circulaire (2), **caractérisés en ce que** sont prévus une tour cylindrique placée de façon concentrique dans le bassin circulaire (2), qui renferme une chambre de commande et de vannes (3.1) et un bâtiment de contrôle (3.2), ainsi qu'une arrivée (11) et au moins un écoulement (12) pour l'eau potable, **en ce qu'**est prévue au moins une paroi de séparation de l'espace circulaire (10.1, 10.2) divisant le bassin circulaire, dont l'une des faces présente l'arrivée et l'autre face l'écoulement, et **en ce que** la paroi de séparation de l'espace circulaire qui est au moins prévue entre la paroi extérieure (5) et la chambre (3) est disposée avec une inclinaison telle que deux angles aigus se forment respectivement entre la paroi de séparation et la paroi éxtérieure et entre la paroi de séparation et la tour circulaire.

2. Réservoir surélevé selon la revendication précédente, **caractérisé en ce qu'**un tuyau d'arrivée comportant au moins un gicleur d'arrivée, d'une part, et un tuyau de prise comportant au moins un point d'écoulement, d'autre part, sont associés à la paroi de séparation annulaire (10.1, 10.2).

3. Réservoir surélevé selon la revendication précédente, **caractérisé en ce que** des gicleurs sont prévus dans l'un des angles aigus et l'écoulement, dans l'autre angle aigu.

4. Réservoir surélevé selon la revendication précédente, **caractérisé en ce qu'**un filtre à tamis est prévu dans l'angle de prise.

5. Réservoir surélevé selon l'une des revendications précédentes, **caractérisé en ce que** la paroi de séparation de l'espace circulaire est disposée avec une inclinaison telle que l'arête extérieure radiale est à l'arrière par rapport au sens de circulation, sachant que l'arrivée est située dans la zone radiale extérieure et l'écoulement, dans la zone radiale intérieure.

6. Réservoir surélevé selon l'une des revendications 1 à 5, **caractérisé en ce que** le fond de la chambre à eau est incliné de façon conique vers l'intérieur.

7. Réservoir surélevé selon l'une des revendications 1 à 5, **caractérisé en ce que** la paroi de séparation de l'espace circulaire est disposée avec une inclinaison telle que l'arête extérieure radiale est à l'avant par rapport au sens de circulation, sachant que l'arrivée est située dans la zone radiale intérieure et l'écoulement, dans la zone radiale extérieure.

8. Réservoir surélevé selon la revendication précédente, **caractérisé en ce que** le fond de la chambre à eau est incliné de façon conique vers l'extérieur.

9. Réservoir surélevé selon l'une des revendications précédentes, **caractérisé en ce que** deux parois de séparation obliques sont prévues dans l'espace circulaire.

10. Réservoir surélevé selon la revendication précédente, **caractérisé en ce que** les deux parois de séparation sont situées dans des quarts de cercle opposés du bassin circulaire.

11. Réservoir surélevé selon l'une des revendications précédentes, **caractérisé en ce que** les parois de séparation de l'espace circulaire sont parallèles entre elles.

12. Réservoir surélevé selon l'une des revendications précédentes, **caractérisé en ce que** la paroi de séparation de l'espace circulaire forme avec la paroi extérieure un angle d'environ 60°.
